# EUROPEAN PATENT SPECIFICATION

(11) **EP 4 411 580 B1**
(45) Date of publication and mention of the grant of the patent: **03.12.2025**
(21) Application number: 23154253.1
(22) Date of filing: 31.01.2023
(51) Int. Cl.: G06F 21/57, H04L 9/40

(54) **METHOD FOR IDENTIFYING ONE OR MORE EXPLOITABLE VULNERABILITIES IN DEVICE FIRMWARE OF AN IOT DEVICE**
VERFAHREN ZUR IDENTIFIZIERUNG EINER ODER MEHRERER VERWERTBARER SCHWACHSTELLEN IN DER VORRICHTUNGSFIRMWARE EINER IOT-VORRICHTUNG
PROCÉDÉ D'IDENTIFICATION D'UNE OU DE PLUSIEURS VULNÉRABILITÉS EXPLOITABLES DANS UN MICROLOGICIEL DE DISPOSITIF D'UN DISPOSITIF IDO

(43) Date of publication of application: 07.08.2024
(73) Proprietor: ONEKEY GmbH, 40477 Düsseldorf (DE)
(72) Inventor: Kaiser, Quentin, 1190 Wien (AT); Lukavsky, Florian, 1190 Wien (AT)
(74) Representative: Sonnenberg Harrison Partnerschaft mbB

(56) References cited:
- US-A1- 2019 294 802
- US-A1- 2020 042 715
- US-A1- 2020 117 808
- YADAV GEETA ET AL: "IoT-PEN: A Penetration Testing Framework for IoT", 2020 INTERNATIONAL CONFERENCE ON INFORMATION NETWORKING (ICOIN), IEEE, 7 January 2020 (2020-01-07), pages 196 - 201, XP033730156, DOI: 10.1109/ICOIN48656.2020.9016445

## Description

### FIELD OF THE INVENTION

The field of the invention relates to a method and system for identifying one or more exploitable vulnerabilities in device firmware of an IoT device.

### BACKGROUND OF THE INVENTION

With the growth of the global Internet of Things (IoT) device market, the number of IoT devices has increased dramatically with a recent report suggesting that there will be 41 billion IoT devices by 2027, up from around 8 billion in 2019 (accessed at https://www.businessinsider.com/internet-of-things-report?r=DE&IR=T on 8 November 2022). The purpose of these IoT devices is to collect information using embedded sensors or other technologies and to connect and exchange information with other IoT devices and processors over the Internet and through a local intranet.

Manufacturers of the IoT devices often rely on third-party software and hardware components to speed up development processes. In addition to their own code base, these third-party software and hardware components may potentially contain critical security vulnerabilities and the third-party software and hardware components need to be tested, both for publicly known vulnerabilities and other identified vulnerabilities. The increasing amount of competition in the IoT device market means that the manufacturers of the IoT devices often shorten their release cycles and release those IoT devices without extensive security testing. The increasing use of IoT devices in private homes, which are connected to the Internet, has also become a growing concern because of data privacy and security issues.

This problem has been recognized and non-governmental organizations, standards setting organizations, industry trade organizations, and governments have released "best practice recommendations" and legal standards to promote and enforce the practice of releasing well-tested, secure IoT devices. There are, however, a number of these recommendations and standards against which the newly released IoT devices need to be certified compliant and this in turn has become an issue due to the large amount of time and resources required to test against the different types of standards.

The firmware of IoT devices is usually composed of a variety of opensource and proprietary software components. Many of these software components are affected by vulnerabilities, which are collected and described, for example, by Mitre (https://www.mitre.org/) in Common Vulnerabilities and Exposures (CVE) databases. A common procedure for testing IoT devices is to use the version information of software components of the IoT device to determine which vulnerabilities may affect these software components and therefore these IoT devices. This procedure, however, often leads to detecting vulnerabilities which in fact are not affecting the specific IoT device or are not exploitable with the specific IoT device (i.e., false positives), since for a vulnerability to actually affect a specific IoT device, further prerequisites must be met than the mere presence of a specific software version of a specific software component.

A number of prior art documents are known which address the issue of vulnerabilities and exposures in the IoT devices and networks. For example, the international patent application WO 2007/110093 A1 describes a system for identifying malicious messages transmitted over a mobile communication network including sentinel modules associated with respective mobile terminals in the network for monitoring messages passing therethrough.

The US patent application US 2008/034417 A1 describes systems and methods for using a client agent operating in a virtual private network environment to intercept HTTP communications. The methods include intercepting at the network layer, by a client agent executing on a client, an HTTP request from an application executing on the client, modifying the HTTP request, and transmitting, via a transport layer connection, the modified HTTP request to a server.

The international patent application WO 2014/122662 A1 describes a method, a product and a computer program product for effecting an evolutionary process on malware. The method includes the steps of receiving a malware specimen, generating variants of the malware specimen, evaluating the variants and awarding variant a fitness score, selecting the variants having at least a predefined fitness score, and using the selected variants as the malware specimens in the first step from which to generate a new generation of the variants.

The international patent application WO 2015/016901 A1 describes generating signal tokens indicative of malware. A code analysis is performed on known malware application code and known clean application code to generate tokens. Signal tokens indicative of malware are generated based on groupings of the tokens.

The US patent US 10 474 813 B1 describes a technique for injecting code into a suspicious process containing malware executing on a node to enable remediation at the node. The technique may inject code into the suspicious process during instrumentation of the malware in a micro-virtual machine to monitor malicious behavior and to enable remediation of that behavior at a node embodied as an endpoint.

The US patent US 10 482 244 B1 describes a method for efficiently matching files. The method includes analyzing a file to identify a set of functions within the file and relationships between functions within the set of functions, creating a set of representations for the set of functions by, for each function, combining a representation of a size of the function with a representation of a size of each function identified, when analyzing the file, as having a relationship to the function, comparing the set of representations of the set of functions with a set of representations of an additional set of functions identified within an additional file, and determining, based on comparing the sets of representations, that the file matches the additional file.

The Chinese patent application CN 112 182 569 A describes a file identification method, apparatus and device, and a storage medium. The method comprises the steps of determining a type of a to-be-identified file, analyzing the to-be-identified file by utilizing an analysis mode corresponding to the type of the to-be-identified file to obtain an analyzed to-be-identified file, obtaining object information of the analyzed to-be-identified file, determining a character string in the object information, and when the character string contains a preset suspicious character string, determining that the to-be-identified file is a suspicious file.

The European patent application EP 37 98 885 A1 describes a method for detection of malicious files including training a mapping model for mapping files in a probability space. A plurality of characteristics of an analyzed file is determined based on a set of rules. A mapping of the analyzed file in the probability space is generated based on the determined plurality of characteristics. A first database is searched using the generated mapping of the analyzed file to determine whether the analyzed file is associated with a family of malicious files. The first database stores mappings associated with one or more families of malicious files. In response to determining that the analyzed file is associated with the family of malicious files, a selection of one or more methods of malware detection is made from a second database. The second database stores a plurality of malware detection methods.

The publication by Helmke, René and Johannes vom Dorp. "Towards Reliable and Scalable Linux Kernel CVE Attribution in Automated Static Firmware Analyses." ArXiv abs/2209.05217 (2022) describes a version-based CVE matching enriched with kernel-specific build data from binary images using automated static firmware analysis. The approach described in this publication analyses the kernel configuration file downloaded from the IoT device to analyze the firmware and only describes the analysis of kernels based on the Linux operating system. The paper describes construction of a database of any issues in real time when analyzing the firmware.

An open-source tool for analyzing the firmware of embedded software in IoT devices is known as EMBA and can be found at the GitHub repository (s. https://github.com/e-m-b-a). Further details are found at the website https://www.securefirmware.de/). The EMBA tool also constructs a database in real time when analyzing the firmware.

The US patent application US 2020/117808 A1 describes a method for assessing vulnerability in a system of electronic devices, comprising determining a distinguishing characteristic of a version of a computer program to distinguish that version from at least one further version. The method further comprises identifying an indication of a defect giving rise to vulnerability to malicious activity in code or data used by the distinguished version. The method further comprises maintaining a mapping between the distinguished version and the indication, scanning the system for presence of the distinguished version, determining that a vulnerable portion is used by the distinguished version, and in response indicating with a vulnerability indicator that the electronic device is vulnerable to the malicious activity according to the mapping. US 2020/117808 A1 does not describe a comparison with other properties of the computer program to assess the extent to which a vulnerability can also be exploited in the specific electronic device. US 2020/117808 A1 further does not describe an internal database or an external database comprising sets of prerequisites for the vulnerabilities.

The US patent application US 2020/042715 A1 describes a method for firmware verification. The method comprises obtaining a list of libraries utilized by a firmware. The method comprises determining a set of vulnerabilities of the firmware by identifying vulnerabilities corresponding to each library of the list of libraries. The method further comprises determining a set of remedial actions for the set of vulnerabilities, the set of remedial actions including an offline remedial action and an online remedial action. The method further comprises determining for the set of vulnerabilities a combination of remedial actions based on estimated costs and estimated runtime overheads of the set of remedial actions. US 2020/042715 A1 does not describe disclose determining associated properties of the firmware and does further not disclose a database comprising sets of prerequisites for the vulnerabilities, wherein recorded details of the vulnerabilities are filtered using the associated properties and wherein the filtering is based on information derived from the sets of prerequisites for assessing the exploitability of the vulnerabilities.

The US patent application US 2019/0294802 A1 describes a continuous monitoring for detecting firmware threats. An example system includes a processing pipeline that receives a firmware image from an entity (such as a manufacturer of an IoT device), an extractor that receives the firmware image through the processing pipeline, the extractor being configured to determine and extract files within the firmware image, a task queue that receives the extracted files and one or more analyzers. The analyzers obtain the files from the task queue and perform at least one type of vulnerability analysis on the files. The system includes a database that stores a log of the at least one type of vulnerability analysis, the log being associated with any of the firmware image and a device identifier of the device. The system can further comprise a common vulnerabilities and exposures (CVE). The analyzers can be utilized to process executable files using various algorithms that compare components of the firmware image to entries or objects in the CVE database. US 2019/0294802 A1 does not describe determining associated properties of the firmware image and does further not disclose that the CVE database comprises sets of prerequisites for vulnerabilities, wherein recorded details of the vulnerabilities are filtered using the associated properties and wherein the filtering is based on information derived from the sets of prerequisites for assessing the exploitability of the vulnerabilities.

There is no system known in the art for determining relevant vulnerabilities of IoT devices, including those based on kernels not using the Linux operating system, by evaluating the relevance of known vulnerabilities of software components of the IoT device based on further preconditions of the IoT device.

### SUMMARY OF THE INVENTION

The present invention solves the technical problem of enhancing the efficiency of determination of relevant vulnerabilities of an IoT device whose firmware is composed of several software components. The present invention reduces the time which is needed to fix the relevant vulnerabilities, as those vulnerabilities which are not exploitable for the IoT device are disregarded and thus the number of vulnerabilities to address is reduced.

The present document describes a computer-implemented method for identifying one or more exploitable vulnerabilities in device firmware of an IoT device. The method comprises the steps of receiving an image of the device firmware and analyzing the image to determine software components of the device firmware and associated properties of the firmware. The method further comprises the step of accessing at least one of an external database or an internal database. The at least one of an external database or an internal database comprise recorded details of the one or more vulnerabilities of the software components and further comprise sets of prerequisites for the one or more vulnerabilities. The method further comprises the step of filtering the recorded details using the associated properties. The filtering is based on information derived from the sets of prerequisites for the one or more vulnerabilities. The method further comprises the step of downloading the filtered ones of the recorded details.

The downloaded filtered ones of the recorded details can be displayed on a display device.

The associated properties can be at least one of recorded version numbers of the software components, interacting ones of the software components, device architecture, and configuration of the device firmware.

The filtering can be based on the version numbers of the software components in the IoT device, and the downloading of the recorded details is performed when the version numbers are identical.

The internal database can comprise sets of prerequisites for the one or more vulnerabilities. The internal database is pre-constructed with details of the vulnerabilities and is not constructed on the fly when analyzing the firmware. The internal database can be regularly updated with details of newly identified vulnerabilities which accelerates the method as the external databases do not need to be consulted during the analysis of the firmware.

The internal database can comprise the sets of prerequisites and the external database can not comprise the sets of prerequisites.

The recorded details can include one or more of explanations of the vulnerabilities and patches.

The filtering can be based on a vulnerability score indicating a degree of exploitability of the one or more vulnerabilities.

A system for identifying one or more exploitable vulnerabilities in device firmware of an IoT device is further described. The system comprises at least one of an internal database for storing recorded details of the one or more vulnerabilities and sets of prerequisites for the one or more vulnerabilities and an external database for storing recorded details of the one or more vulnerabilities of software components of the device firmware and sets of prerequisites for the one or more vulnerabilities. The system further comprises a processor for analyzing an image of the device firmware to determine the software components of the device firmware, and associated properties of the firmware, accessing at least one of the internal database and the external database, filtering the recorded details using the associated properties, and downloading the filtered ones of the recorded details. The filtering is based on information derived from the sets of prerequisites for the one or more vulnerabilities.

The system can further comprise a display device for displaying the downloaded filtered ones of the recorded details. The system can further comprise an analysis database for storing details about the determined software components and details about the determined associated properties.

A use of the method for identifying one or more vulnerabilities in device firmware of an IoT device for vulnerability analysis of a firmware of an IoT device is further described.

A data processing apparatus comprising means for carrying out the method for identifying one or more vulnerabilities in device firmware of an IoT device is further described.

A computer program comprising instructions which, when the program is executed by a computer, cause the computer to carry out the method for identifying one or more vulnerabilities in device firmware of an IoT device is further described.

A computer-readable medium comprising instructions which, when executed by a computer, cause the computer to carry out the method for identifying one or more vulnerabilities in device firmware of an IoT device is further described.

### DESCRIPTION OF THE FIGURES

FIG. 1 shows a block diagram of a system according to the invention.
FIG. 2 shows a flow chart describing a method according to the invention.

### DETAILED DESCRIPTION OF THE INVENTION

The invention will now be described on the basis of the figures. It will be understood that the embodiments and aspects of the invention described herein are only examples and do not limit the protective scope of the claims in any way. The invention is defined by the claims. It will be understood that features of one aspect or embodiment of the invention can be combined with a feature of a different aspect or aspects and/or embodiments of the invention.

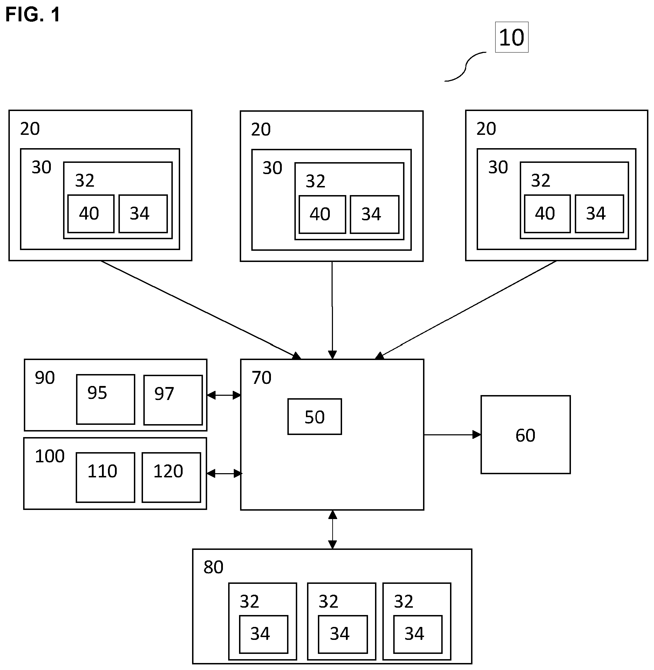

FIG. 1 shows a block diagram of a system 10 for identifying one or more exploitable vulnerabilities 40 in device firmware 30 of an IoT device 20. Specific prerequisites must be met by the IoT device 20 or the firmware 30 for a vulnerability to actually affect a specific IoT device and therefore be exploitable. The device firmware 30 is stored in the IoT device 20. The system 10 can identify the one or more exploitable vulnerabilities 40 in the device firmware 30 of a plurality of the IoT devices 20. Fig. 1 shows three IoT devices 20, but it will be appreciated that this is not limiting of the invention and that there can be many more IoT devices 20, which can be analyzed by the system 10 to identify the vulnerabilities 40.

The IoT devices 20 are unlikely to be of the same design and may have different hardware and software components. The IoT devices 20 may also generally perform different functions. Non-limiting examples of the IoT devices 20 include, but are not limited to, temperature sensors, humidity sensors, vibration sensors, CCTV cameras, industrial control systems, and smart health devices. The IoT devices 20 have in common that the IoT devices 20 include software to operate the IoT devices 20. The software is embedded in the firmware 30 of the IoT devices 20.

The firmware 30 controls the operation of the hardware in the IoT device 20 and is composed of one or more software components 32. Ones of the software components 32 can be from a variety of open-source software components 32 or software components 32 provided by another entity than the manufacturer of the IoT device 20. Other ones of the software components 32 can be proprietary software components 32 programmed by the manufacturer of the IoT device 20.

The firmware 30 is stored in a storage medium on the IoT device 20. The storage medium used in the IoT device 20 for the firmware 30 is usually a non-volatile memory, such as but not limited to extended flash memory, which retains the code of the firmware 30 even without power being supplied to the IoT device. Volatile memory can also be present to store data and some code temporarily.

The firmware 30 has a variety of associated properties 34 which characterize the firmware 30 and/or the IoT device 20. The properties 34 can also characterize individual ones of the software components 32. The properties 34 can, in this case, be a recorded version number of the individual ones of the software components 32 or a list of other ones of the software components 32 with which the individual ones of the software components 32 interact. The properties 34 can comprise additional properties characterizing individual ones of the software components 32.

The properties 34 can further characterize the firmware 30 beyond individual ones of the software components 32. The properties 34 can in this case be a configuration of the firmware 30, settings of the firmware 30, software components 32 comprised by the firmware 30 or a version number of the firmware 30. The properties 34 can comprise additional properties characterizing the firmware 30.

The properties 34 can further characterize the IoT device 20 beyond individual ones of the software components 32 or the firmware 30. The properties 34 can in this case be an architecture of the IoT device 20 and the hardware components comprised by the IoT device 20. The properties 34 can comprise further properties characterizing the IoT device 20.

The firmware 30 and, in particular, some of the software components 32 may be affected by one or more of the vulnerabilities 40. The vulnerabilities 40 can be, but not limited to, encryption issues when communicating with a back end, insecure communications over an insecure channel, problems with certificates, configuration errors, improper neutralization of special elements used in an OS command (see https://cwe.mitre.org/data/definitions/78.html), improper limitation of a pathname to a restricted directory (see https://cwe.mitre.org/data/definitions/22.html), and out-of-bounds read (see https://cwe.mitre.org/data/definitions/125.html).

The system 10 further comprises an external database 100. Known ones of the vulnerabilities 40 of the software components 32 are collected and described by third-parties and stored as recorded details 110 in the external database 100. Examples of the external database 100 are version control system, such as Git. The recorded details 110 comprise information about the vulnerability 40 such as, but not limited to, a detailed explanation of the vulnerability 40, and a date on which the vulnerability 40 was detected. The detailed explanation of the vulnerability 40 can include so-called prerequisites. The prerequisites are information about any properties the IoT device 20 or its firmware 30 has to meet in order to be affected by the vulnerability 40, such as, but not limited to, information about hardware components that the IoT device 20 has to comprise, and information about certain settings, configuration or architecture of the IoT device 20. In other words, the vulnerability 40 is exploitable for the IoT device 20 if the IoT device 20 or the firmware 30 meet the prerequisites for vulnerability set out in the detailed explanation of the vulnerability 40. The recorded details 110 further comprise information about the software components 32 that are affected by the respective vulnerability 40, such as, but not limited to, a description of the software component 32, the recorded version number of the software component 32, and the provider of the software component 32. An example for a third-party and the external database 100 is the afore-mentioned database operated by Mitre (https://www.mitre.org/) with their Common Vulnerabilities and Exposures (CVE) databases. The system 10 can alternatively comprise more than one external database 100.

The external database 100 further comprises sets of prerequisites 120 for the stored vulnerabilities 40. The prerequisites 120 provide information about identifying the vulnerability and whether the vulnerability 40 can be remedied. The external database 100 may also contain information or point to a link to indicate how the vulnerability 40 can be remedied. Such work-arounds would, for example, comprise information on how to edit the code, change the settings or the configuration of the firmware 30 or of the corresponding software component 32 or other one(s) of the software components 32 to remedy the identified vulnerability/ies 40. The work-arounds can be found, for example, by checking source code repositories for open-source software components for commits that fix the vulnerability 40, such as git.kernel.org. Other repositories include, but are not limited to, https://busybox.net/downloads/ for BusyBox or https://github.com/openssl/openssl for OpenSSL.

The system 10 further comprises an internal database 90. Known ones of the vulnerabilities 40 of the software components 32 in the system 10 are collected and described by the provider or operator of the system 10 and stored as recorded details 95 in the internal database 90. The recorded details 95 can be based on the recorded details 110 stored in the external database 100. The recorded details 95 can further be based on multiple sources such as, but not limited to, security bulletins, security advisories, CVE information and commits to open source projects fixing vulnerabilities. The recorded details 95 comprise information about the vulnerability 40 such as, but not limited to, a detailed explanation of the vulnerability 40, and a date on which the vulnerability 40 was detected. The detailed explanation of the vulnerability 40 can comprise the prerequisites. The prerequisites are information about any properties the IoT device 20 or its firmware 30 has to meet in order to be affected by the vulnerability 40, such as, but not limited to, information about hardware components that the IoT device 20 has to comprise, and information about certain settings, configuration or architecture of the IoT device 20. The recorded details 95 further comprise information about the software components 32 that are affected by the corresponding vulnerability 40, such as, but not limited to, a description of the software component 32, the recorded version number of the software component 32, and the provider of the software component 32. The system 10 can alternatively comprise more than one internal database 90.

The internal database 90 is created and maintained independently of the analysis of a specific firmware 30. In other words, the recorded details 95 for ones of the vulnerabilities are updated and recorded details 95 for new ones of the vulnerabilities 40 are added to the internal database 90 not only when a specific firmware 30 is analyzed but in a continuous manner. This continuous enhancement of the internal database enhances the performance of the analysis of the firmware 30 as the internal database 90 is ready to use and does not have to be created or updated when analyzing the firmware 30.

The recorded details 95 can be obtained from so-called "commits". In the context of the firmware 30, the term "commit" refers to a set of changes made to the firmware code of the firmware 30 that is saved in the external database 100. The commit includes details, such as a message describing the changes made, as well as the author of the changes.

The system further comprises a processor 70. The processor 70 can communicate and exchange data with the internal database 90 and the external database 100. The processor 70 can receive one or more images 50 of the firmware 30 from one or more of the IoT devices 20. The images 50 of the firmware 30 can be received directly from the manufacturer or vendor of the IoT devices 20, for example from a website, or the images 50 can be received by downloading the images 50 from the IoT devices 20. The images 50 of the firmware 30 can be placed into a pipeline of the processor 70 where the images 50 are stored for later access by the processor 70.

The processor 70 is adapted to analyze the image 50 of the firmware 30 to determine the software components 32 of which the firmware 30 is composed and to determine the properties 34 associated with the firmware 30. Details about the determined software components 32 of the firmware 30 and/or details about the determined properties 34 associated with the firmware 30 can be stored in an analysis database 80. The analysis database 80 can be a specific database for the IoT device 20 and only store the results of the analysis of the firmware 30 of the IoT device 20. The analysis database 80 can alternatively store the results of the analysis of the firmware 30 of several ones of the IoT devices 20. The processor 70 is further adapted to access the internal database 90 and the external database 100 and to filter the recorded details 95, 110 using the properties 34 of the firmware 30. The processor 70 is further adapted to calculate a vulnerability score S. The processor 70 is further adapted to download the filtered ones of the recorded details 95, 110.

The system 70 further comprises a display device 60 such as, but not limited to, a monitor. The display device 60 is connected to the processor 70. The processor 70 can communicate with the display device 60 to display information on the display device 60. The processor 70 can, for example, display the downloaded filtered ones of the recorded details 95, 110 on the display device 60. The processor 70 can alternatively communicate with an external device such as, but not limited to, a smartphone or tablet computer, to display the downloaded filtered ones of the recorded details 95, 110 on the external device.

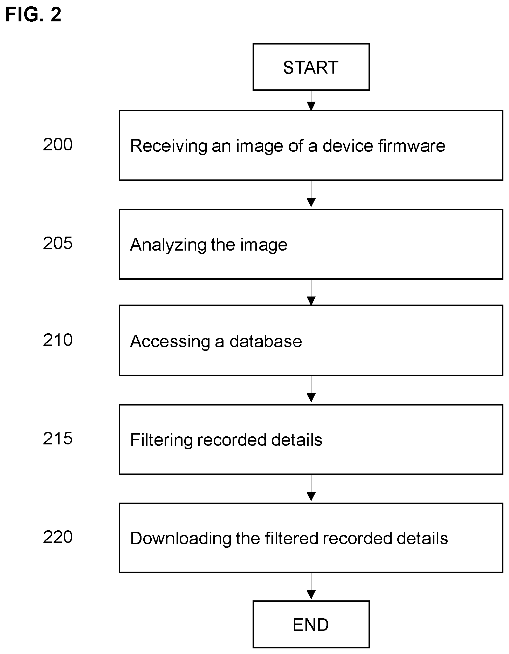

FIG. 2 shows a flow chart describing a method according to the invention. The method is for identifying the one or more exploitable vulnerabilities 40 of the firmware 30 of the IoT device 20. The image 50 of the firmware 30 of the IoT device 20 is received in a step 200. As noted above, the image 50 can be received directly from the manufacturer or vendor of the IoT device 20, for example from a website, or the images 50 can be received by downloading from the IoT devices 20. The image 50 can alternatively be received from a pipeline or queue with a plurality of images 50.

The image 50 is analyzed in a step 205 to determine the software components 32 of which the firmware 30 is composed. The properties 34 associated to the firmware 30 are further determined in the step 205. The software components 32 and the properties 34 can be derived from analyzing a kernel configuration file (kernel_config) of the firmware 30. The kernel configuration file contains, for example, kernel options, device options, and list of devices that were specified during the build process of the kernel in the firmware 30 of the IoT device. As is known, the compilation of the kernel is reproducible using the "recipe" stored in the kernel configuration file. For example, it is possible to derive from the kernel configuration file exactly which source code parts of the source code were used to compile the final kernel used in the IoT device 20.

However, in practice, the kernel configuration file is available only for a fraction of the variety of different firmware 30 found in the multitude of IoT devices 20, as the kernel configuration file is often not embedded for security reasons when the kernel is compiled. This restriction can be overcome by using "symbols" of the firmware 30 when analyzing the image 50. These symbols are copied on compiling from the source code can refer to, e.g., variable names, function names, and file names. The names of the symbols can still be found in the compiled version of the firmware 30. The use of the symbols for analyzing the image 50 allows to analyze the firmware 30 even if the kernel configuration file is not present in the image 50 and does not limit the analysis to the Linux Kernel. This analysis is extended to other open-source Linux applications such as but not limited to e.g., BusyBox or OpenSSL.

Details about the software components 32 and details about the properties 34 are stored in the analysis database 80. The internal database 90 and the external database 100 is accessed in a step 210. Alternatively, only one of the internal database 90 and the external database 100 or more than one internal database 90 and/or more than one external database 100 can be accessed in the step 210. As noted above, the internal database 90 comprises the recorded details 95 of the one or more vulnerabilities 40 and may indicate locations of the work-arounds 97 to repair the one or more vulnerabilities 40.

The recorded details 95, 110 are filtered in a step 215 using ones of the properties 34 which can be received from the analysis database 80. In other words, it is necessary that the firmware 30 fulfills the prerequisites 120 comprised by the recorded details 95, 110 regarding one of the vulnerabilities 40 to conclude that the firmware 30 is affected by this one of the vulnerabilities 40 or that the vulnerability 40 is exploitable. The recorded details 95, 110 are filtered using ones of the properties 34 of the firmware 30 of the IoT device 34. The filtering 215 results in a list of ones of the recorded details 95, 110 whose prerequisites 120 match with the properties 34 of the firmware 30. The recorded details 95, 110 whose prerequisites do not match with the properties of the firmware 30 are disregarded during the filtering 215.

One of the recorded details 95, 110 may, for example, have the prerequisite of a certain version number of the firmware 30. This one of the recorded details 95, 110 is only kept during the filtering 215 if the respective firmware 30 has the certain version number as one of its properties 34.

The filtering 215 is triggered by the processor 70 and performed by the one or more internal database 90 and/or the one or more external database 100. The filtering 215 can alternatively be performed by the processor 70, if the processor 70 downloaded a plurality of the recorded details 95, 110 before the filtering 215.

The filtering 215 can alternatively or additionally be based on the vulnerability score S. The vulnerability score indicates a degree of the exploitability of the vulnerability 40 for the IoT device 20. A high vulnerability score S indicates a high risk that the vulnerability 40 is exploitable by the IoT device 20. The vulnerability score S can be calculated by the processor 70 individually for the specific firmware 30 with regards to the specific vulnerability 40. The vulnerability score S can be increased, if a property 34 of the firmware 30 of the IoT device 20 meets a prerequisite for the vulnerability 40. The vulnerability score S on the other hand is decreased, if the firmware 30 does not meet a prerequisite of the vulnerability 40. The vulnerability score S can take values in the closed interval from -100 to 100. The recorded details 95, 110 can be filtered using the vulnerability scores S of the respective vulnerabilities 40. The recorded details 95, 110 can be sorted with respect to the vulnerability scores S and ones of the recorded details 95, 110 which have a vulnerability score S which is lower than a threshold can be disregarded.

The filtered recorded details 95, 110 are downloaded in a step 220 from the one or more internal database 90 and/or the one or more external database 100. The downloaded filtered recorded details 95, 110 are displayed on the display device 60. The vulnerability score S for the vulnerabilities can alternatively or additionally also be downloaded in step 220 and be displayed on the display device 60. The information which ones of prerequisites for each one of the vulnerabilities 40 are fulfilled by the firmware 30 and which ones of the prerequisites are not fulfilled by the firmware 30 can also be displayed on the display device 60.

### Example

A few examples will now illustrate the method and system.

A first example describes the vulnerability 40 "CVE-2019-12615". "CVE-2019-12615" describes an unauthenticated remote denial of service vulnerability in the Linux Kernel caused by a null pointer dereference. The null pointer dereference occurs when the application dereferences a pointer that it expects to be valid, but is null and typically causes a crash or exit. This vulnerability is rated with a high CVSS (Common Vulnerability Scoring System) v3.1 base score of 7.5 and can cause a system crash of the IoT device 20. This vulnerability 40 occurs in a function 'get_vdev_port_node_info' in 'arch/sparc/kernel/mdesc.c' and therefore only affects kernel versions that run on the SPARC architecture.

The recorded details 95, 110 for this vulnerability 40 are comprised, for example, in the afore-mentioned Common Vulnerabilities and Exposures (CVE) databases by Mitre. These CVE databases are accessed in step 210. The recorded details 95, 110 for this vulnerability 40 comprise the prerequisite that the IoT device 20 must include the function 'get_vdev_port_node_info', must comprise the file 'mdesc.c' and must run on the SPARC architecture to be affected by this vulnerability. The IoT device 20 which is to be analyzed for ones of the vulnerabilities 40 therefore must have the properties 34 that the IoT device 20 includes the function 'get_vdev_port_node_info', that the IoT device 20 additional comprises the file 'mdesc.c', and that the IoT device runs on the SPARC architecture. Assume that during the analysis of the IoT device 20 it is determined that the IoT device 20 runs on an ARM architecture, the file 'mdesc.c' is not present and none of the functions 'vdev_port', 'node_info', 'kstrdup_const', or 'get_vdev_port_node_info' are included in any binary of the firmware 30. It can therefore be concluded that the IoT device 20 is not affected by this vulnerability 40 and the vulnerability 40 can be disregarded during the filtering 215. The recorded details 95, 110 for this vulnerability 40 is therefore not downloaded from the CVE databases in step 220.

A second example describes the vulnerability 40 "CVE-2022-27223". "CVE-2022-27223" is a vulnerability affecting the Linux Kernel prior to version number 5.16.12 and may allow a low-privileged device to gain unauthorized access to device memory. This vulnerability 40 is rated with a high CVSS v3.1 base score of 8.8. This vulnerability 40 occurs in functions 'xudc_getstatus' and 'xudc_set_clear_feature' in 'drivers/usb/gadget/udc/udc-xilinx.c'. The recorded details 95, 110 for this vulnerability 40 are comprised, for example, in the afore-mentioned Common Vulnerabilities and Exposures (CVE) databases by Mitre. These CVE databases are accessed in step 210. The recorded details 95, 110 for this vulnerability 40 comprise the prerequisite that the IoT device 20 must include the functions 'xudc_getstatus' and 'xudc_set_clear_feature' and must comprise the file 'udc-xilinx.c' to be affected by this vulnerability. The information for the set of vulnerability was derived from a commit addressing this vulnerability 40 which was found on the Linux kernel repository kernel.org (accessed at https://github.com/torvalds/linux/commit/7f14c7227f342d9932f9b918893c8814f86d2a0d).

The IoT device 20 which is to be analyzed for ones of the vulnerabilities 40 therefore must have the properties 34 that the IoT device 20 includes the functions 'xudc_getstatus' and 'xudc_set_clear_feature', and that it comprises the file 'udc-xilinx.c'. Assume that during the analysis of the IoT device 20 it is determined that the IoT device 20 comprises neither the affected functions nor the affected file on the firmware 30. It can therefore be concluded that the IoT device 20 is not affected by this vulnerability 40 and this vulnerability 40 can be disregarded during the filtering 215. The recorded details 95, 110 for this vulnerability 40 is therefore not downloaded from the CVE databases in step 220.

A third example describes the vulnerability 40 "CVE-2021-38201". "CVE-2021-38201" describes an unauthenticated remote denial of service vulnerability affecting the Linux Kernel. This vulnerability 40 occurs in a function 'xdr_set_page_base' in 'net/sunrpc/xdr.c'. The recorded details 95, 110 for this vulnerability 40 are comprised, for example, in the afore-mentioned Common Vulnerabilities and Exposures (CVE) databases by Mitre. These CVE databases are accessed in step 210. The recorded details 95, 110 for this vulnerability 40 comprise the prerequisite that an IoT device 20 must include the function 'xdr_set_page_base', and must comprise the file 'xdr.c' to be affected by this vulnerability. The IoT device 20 which is to be analyzed for ones of the vulnerabilities 40 therefore must have the properties 34 that it includes the function 'xdr_set_page_base', and that the IoT device 20 comprises the file 'xdr.c. Assume that during the analysis of the IoT device 20 it is determined that the IoT device 20 comprises the affected function and the affected file on the firmware 30. The version of the Linux Kernel further pre-dates a work-around 97, 120 for this vulnerability 40. It can therefore be concluded that the IoT device 20 may be affected by this vulnerability 40 with increased confidence and it will not be disregarded during the filtering 215. The recorded details 95, 110 for this vulnerability 40 are therefore downloaded from the CVE databases in step 220.

### Reference numerals

- 10: System
- 20: IoT device
- 30: Firmware
- 32: Software components
- 34: Properties
- 40: Vulnerabilities
- 50: Image
- 60: Display device
- 70: Processor
- 80: Analysis database
- 90: Internal database
- 95: Recorded details
- 97: Work-arounds
- 100: External database
- 110: Recorded details
- 120: Prerequisite
- 200: Receiving an image of a device firmware
- 205: Analyzing the image
- 210: Accessing a database
- 215: Filtering recorded details
- 220: Downloading the filtered recorded details
- S: Vulnerability score

## Claims

1. A computer-implemented method for identifying one or more exploitable vulnerabilities (40) in device firmware (30) of an IoT device (20), the method comprising:
- receiving (200) an image (50) of the device firmware (30);
- analyzing (205) the image (50) to determine software components (32) of the device firmware (30), and associated properties (34) of the firmware (30);
- accessing (210) at least one of an external database (100) or an internal database (90), wherein the at least one of an external database (100) or an internal database (90) comprise recorded details (110, 95) of the one or more vulnerabilities (40) of the software components (32) and further comprise sets of prerequisites (120) for the one or more vulnerabilities (40);
- filtering (215) the recorded details (110, 95) using the associated properties (34), wherein the filtering (215) is based on information derived from the sets of prerequisites (120) for the one or more vulnerabilities (40); and
- downloading (220) the filtered ones of the recorded details (110, 95).

2. The computer-implemented method of claim 1, wherein the downloaded filtered ones of the recorded details (110, 95) are displayed on a display device (60).

3. The computer-implemented method of claim 1 or 2, wherein the associated properties (34) are at least one of recorded version numbers of the software components, interacting ones of the software components (32), device architecture, and configuration of the device firmware (30).

4. The computer-implemented method of any of the above claims wherein the filtering (215) is based on the version numbers of the software components (32) in the IoT device (20) and the downloading (220) of the recorded details (110, 95) is performed when the version numbers are identical.

5. The computer-implemented method of any of the above claims, wherein the internal database (90) comprises links to work-arounds (97) for the one or more vulnerabilities (40).

6. The computer-implemented method of any of the above claims, wherein the internal database (90) comprises the sets of prerequisites (120) and wherein the external database (100) does not comprise the sets of prerequisites (120).

7. The computer-implemented method of any of the above claims, wherein the recorded details (110, 95) include one or more of explanations of the vulnerabilities (40) and patches.

8. The computer-implemented method of any of the above claims, wherein the filtering (215) is based on a vulnerability score S indicating a degree of exploitability of the one or more vulnerabilities 40.

9. A system (10) for identifying one or more exploitable vulnerabilities (40) in device firmware (30) of an IoT device (20), the system (10) comprising:
at least one of an internal database (90) for storing recorded details (95) of the one or more vulnerabilities (40) and an external database (100) for storing recorded details (110) of the one or more vulnerabilities (40) of software components (32) of the device firmware (30) and sets of prerequisites (120) for the one or more vulnerabilities (40); and
a processor (70) for
analyzing an image (50) of the device firmware (30) to determine the software components (32) of the device firmware (30), and associated properties (34) of the firmware (30);
accessing at least one of the internal database (90) and the external database (100);
filtering the recorded details (95, 110) using the associated properties (34), wherein the filtering is based on information derived from the sets of prerequisites (120) for the one or more vulnerabilities (40); and downloading the filtered ones of the recorded details (95, 110).

10. The system (10) of claim 9, further comprising a display device (60) for displaying the downloaded filtered ones of the recorded details (95, 110).

11. The system (10) of claims 9 or 10, further comprising an analysis database (80) for storing details about the determined software components (32) and details about the determined associated properties (34).

12. A data processing apparatus comprising means for carrying out the method of any one of claims 1-8.

13. A computer program comprising instructions which, when the program is executed by a computer, cause the computer to carry out the method of any one of claims 1-8.

14. A computer-readable medium comprising instructions which, when executed by a computer, cause the computer to carry out the method of any one of claims 1-8.

## Patentansprüche

1. Computerimplementiertes Verfahren zum Identifizieren einer oder mehrerer ausnutzbarer Schwachstellen (40) in einer Vorrichtungsfirmware (30) einer IoT-Vorrichtung (20), das Verfahren umfassend:
- Empfangen (200) eines Bildes (50) der Vorrichtungsfirmware (30);
- Analysieren (205) des Bildes (50), um Softwarekomponenten (32) der Vorrichtungsfirmware (30) zu bestimmen, und zugehöriger Eigenschaften (34) der Firmware (30);
- Zugreifen (210) auf mindestens eine von einer externen Datenbank (100) oder einer internen Datenbank (90), die mindestens eine von einer externen Datenbank (100) oder einer internen Datenbank (90) umfassend aufgezeichnete Details (110, 95) der einen oder mehreren Schwachstellen (40) der Softwarekomponenten (32) und ferner Sätze von Voraussetzungen (120) für die eine oder mehreren Schwachstellen (40);
- Filtern (215) der aufgezeichneten Details (110, 95) unter Verwendung der zugehörigen Eigenschaften (34), das Filtern (215) basierend auf Informationen abgeleitet von den Sätzen von Voraussetzungen (120) für die eine oder mehreren Schwachstellen (40); und
- Herunterladen (220) der gefilterten von den aufgezeichneten Details (110, 95).

2. Computerimplementiertes Verfahren nach Anspruch 1, bei welchem die heruntergeladenen gefilterten von den aufgezeichneten Details (110, 95) auf einer Anzeigevorrichtung (60) angezeigt werden.

3. Computerimplementiertes Verfahren nach Anspruch 1 oder 2, bei welchem die zugehörigen Eigenschaften (34) mindestens eines von aufgezeichneten Versionsnummern der Softwarekomponenten, interagierenden von den Softwarekomponenten (32), Vorrichtungsarchitektur und Konfiguration der Vorrichtungsfirmware (30) sind.

4. Computerimplementiertes Verfahren nach einem der vorstehenden Ansprüche, bei welchem das Filtern (215) basierend ist auf den Versionsnummern der Softwarekomponenten (32) in der IoT-Vorrichtung (20) und das Herunterladen (220) der aufgezeichneten Details (110, 95) durchgeführt wird, wenn die Versionsnummern identisch sind.

5. Computerimplementiertes Verfahren nach einem der vorstehenden Ansprüche, bei welchem die interne Datenbank (90) Links zu Workarounds (97) für die eine oder mehreren Schwachstellen (40) umfasst.

6. Computerimplementiertes Verfahren nach einem der vorstehenden Ansprüche, bei welchem die interne Datenbank (90) die Sätze von Voraussetzungen (120) umfasst und die externe Datenbank (100) die Sätze von Voraussetzungen (120) nicht umfasst.

7. Computerimplementiertes Verfahren nach einem der vorstehenden Ansprüche, bei welchem die aufgezeichneten Details (110, 95) eines oder mehrere von Erklärungen der Schwachstellen (40) und Patches enthalten.

8. Computerimplementiertes Verfahren nach einem der vorstehenden Ansprüche, bei welchem das Filtern (215) basierend ist auf einer Schwachstellenbewertung S angebend einen Grad der Ausnutzbarkeit der einen oder mehreren Schwachstellen (40).

9. System (10) zum Identifizieren einer oder mehrerer ausnutzbarer Schwachstellen (40) in einer Vorrichtungsfirmware (30) einer IoT-Vorrichtung (20), das System (10) umfassend:
mindestens eine von einer internen Datenbank (90) zum Speichern aufgezeichneter Details (95) der einen oder mehreren Schwachstellen (40) und einer externen Datenbank (100) zum Speichern aufgezeichneter Details (110) der einen oder mehreren Schwachstellen (40) von Softwarekomponenten (32) der Vorrichtungsfirmware (30) und Sätze von Voraussetzungen (120) für die eine oder mehreren Schwachstellen (40); und
einen Prozessor (70) zum
Analysieren eines Bildes (50) der Vorrichtungsfirmware (30), um die Softwarekomponenten (32) der Vorrichtungsfirmware (30) zu bestimmen und zugehöriger Eigenschaften (34) der Firmware (30); Zugreifen auf mindestens eine von der internen Datenbank (90) und der externen Datenbank (100);
Filtern der aufgezeichneten Details (95, 110) unter Verwendung der zugehörigen Eigenschaften (34), das Filtern basierend auf Informationen abgeleitet von den Sätzen von Voraussetzungen (120) für die eine oder mehreren Schwachstellen (40); und
Herunterladen der gefilterten von den aufgezeichneten Details (95, 110).

10. System (10) nach Anspruch 9, ferner umfassend eine Anzeigevorrichtung (60) zum Anzeigen der heruntergeladenen gefilterten von den aufgezeichneten Details (95, 110).

11. System (10) nach Anspruch 9 oder 10, ferner umfassend eine Analysedatenbank (80) zum Speichern von Details über die bestimmten Softwarekomponenten (32) und Details über die bestimmten zugehörigen Eigenschaften (34).

12. Datenverarbeitungsvorrichtung, umfassend Mittel zum Ausführen des Verfahrens nach einem der Ansprüche 1-8.

13. Computerprogramm, umfassend Anweisungen, die, wenn das Programm von einem Computer ausgeführt wird, den Computer veranlassen, das Verfahren nach einem der Ansprüche 1-8 auszuführen.

14. Computerlesbares Medium, umfassend Anweisungen, die, wenn sie von einem Computer ausgeführt werden, den Computer veranlassen, das Verfahren nach einem der Ansprüche 1-8 auszuführen.

## Revendications

1. Procédé mis en œuvre par ordinateur pour identifier une ou plusieurs vulnérabilités exploitables (40) dans un micrologiciel de dispositif (30) d'un dispositif IoT (20), le procédé comprenant :
- recevoir (200) une image (50) du micrologiciel de dispositif (30) ;
- analyser (205) l'image (50) pour déterminer des composants logiciels (32) du micrologiciel de dispositif (30), et des propriétés associées (34) du micrologiciel (30) ;
- accéder (210) à au moins l'une d'une base de donnée externe (100) ou d'une base de donnée interne (90), l'au moins une d'une base de donnée externe (100) ou d'une base de donnée interne (90) comprenant des détails enregistrés (110, 95) des une ou plusieurs vulnérabilités (40) des composants logiciels (32) et comprenant en outre des ensembles de conditions préalables (120) pour les une ou plusieurs vulnérabilités (40) ;
- filtrer (215) les détails enregistrés (110, 95) en utilisant les propriétés associées (34), le filtrage (215) étant basé sur une/des informations dérivées des ensembles de conditions préalables (120) pour les une ou plusieurs vulnérabilités (40) ; et
- télécharger (220) les détails filtrés des détails enregistrés (110, 95).

2. Procédé mis en œuvre par ordinateur selon la revendication 1, dans lequel les détails filtrés téléchargés des détails enregistrés (110, 95) sont affichés sur un dispositif d'affichage (60).

3. Procédé mis en œuvre par ordinateur selon la revendication 1 ou 2, dans lequel les propriétés associées (34) sont au moins l'une parmi des numéros de version enregistré(e)s des composants logiciels, des composants en interaction parmi les composants logiciels (32), une architecture de dispositif, et une configuration du micrologiciel de dispositif (30).

4. Procédé mis en œuvre par ordinateur selon l'une quelconque des revendications précédentes, dans lequel le filtrage (215) est basé sur les numéros de version des composants logiciels (32) dans le dispositif IoT (20) et le téléchargement (220) des détails enregistrés (110, 95) est effectué lorsque les numéros de version sont identiques.

5. Procédé mis en œuvre par ordinateur selon l'une quelconque des revendications précédentes, dans lequel la base de donnée interne (90) comprend des liens vers des solutions de contournement (97) pour les une ou plusieurs vulnérabilités (40).

6. Procédé mis en œuvre par ordinateur selon l'une quelconque des revendications précédentes, dans lequel la base de donnée interne (90) comprend les ensembles de conditions préalables (120) et la base de donnée externe (100) ne comprenant pas les ensembles de conditions préalables (120).

7. Procédé mis en œuvre par ordinateur selon l'une quelconque des revendications précédentes, dans lequel les détails enregistrés (110, 95) comprennent une ou plusieurs explications des vulnérabilités (40) et des correctifs.

8. Procédé mis en œuvre par ordinateur selon l'une quelconque des revendications précédentes s, dans lequel le filtrage (215) est basé sur un score de vulnérabilité S indiquant un degré d'exploitabilité des une ou plusieurs vulnérabilités (40).

9. Système (10) pour identifier une ou plusieurs vulnérabilités exploitables (40) dans un micrologiciel de dispositif (30) d'un dispositif IoT (20), le système (10) comprenant :
au moins l'une d'une base de donnée interne (90) pour stocker des détails enregistrés (95) des une ou plusieurs vulnérabilités (40) et d'une base de donnée externe (100) pour stocker des détails enregistrés (110) des une ou plusieurs vulnérabilités (40) de composants logiciels (32) du micrologiciel de dispositif (30) et des ensembles de conditions préalables (120) pour les une ou plusieurs vulnérabilités (40) ; et
un processeur (70) pour
analyser une image (50) du micrologiciel de dispositif (30) pour déterminer les composants logiciels (32) du micrologiciel de dispositif (30), et des propriétés associées (34) du micrologiciel (30) ;
accéder à au moins l'une de la base de donnée interne (90) et de la base de donnée externe (100) ;
filtrer les détails enregistrés (95, 110) en utilisant les propriétés associées (34), le filtrage étant basé sur des informations dérivées des ensembles de conditions préalables (120) pour les une ou plusieurs vulnérabilités (40) ; et
télécharger les détails filtrés des détails enregistrés (95, 110).

10. Système (10) selon la revendication 9, comprenant en outre un dispositif d'affichage (60) pour afficher les détails filtrés téléchargés des détails enregistrés (95, 110).

11. Système (10) selon la revendication 9 ou 10, comprenant en outre une base de donnée d'analyse (80) pour stocker des détails sur les composants logiciels déterminés (32) et des détails sur les propriétés associées déterminées (34).

12. Appareil de traitement de donnée comprenant des moyens pour mettre en œuvre le procédé selon l'une quelconque des revendications 1 à 8.

13. Programme informatique comprenant des instructions qui, lorsque le programme est exécuté par un ordinateur, amènent l'ordinateur à mettre en œuvre le procédé selon l'une quelconque des revendications 1 à 8.

14. Support lisible par ordinateur comprenant des instructions qui, lorsqu'elles sont exécutées par un ordinateur, amènent l'ordinateur à mettre en œuvre le procédé selon l'une quelconque des revendications 1 à 8.
